# FASCICULE DE BREVET EUROPEEN

(11) **EP 3 381 552 B1**
(45) Date de publication et mention de la délivrance du brevet: **01.01.2020**
(21) Numéro de dépôt: 18305224.0
(22) Date de dépôt: 01.03.2018
(51) Int. Cl.: B01J 23/75, C10G 2/00, B01J 37/08, B01J 37/16, B01J 37/18, B01J 35/02, B01J 35/08, B01J 35/10, C07C 1/04, B01J 37/02, B01J 35/00

(54) **PROCÉDÉ DE PRÉPARATION DE CATALYSEURS À BASE DE COBALT**
HERSTELLUNGSVERFAHREN VON KATALYSATOREN AUF KOBALTBASIS
METHOD FOR PREPARING COBALT CATALYSTS

(30) Priorité: 30.03.2017 FR 1752676
(43) Date de publication de la demande: 03.10.2018
(73) Titulaire: IFP Energies nouvelles, 92852 Rueil-Malmaison Cedex (FR)
(72) Inventeur: MAURY, Sylvie, 69440 Saint Maurice d'Argoire (FR); BERLIET, Adrien, 69004 Lyon (FR)
(74) Mandataire: IFP Energies nouvelles

(56) Documents cités:
- FR-A1- 2 991 199
- US-A1- 2005 227 866

## Description

### DOMAINE TECHNIQUE

Le domaine technique de l'invention est celui de la préparation de catalyseurs à base de cobalt supporté qui peuvent être utilisés pour réaliser la synthèse d'hydrocarbures à partir d'un mélange de gaz comprenant du monoxyde de carbone et de l'hydrogène.

### ETAT DE LA TECHNIQUE

Les procédés de synthèse Fischer-Tropsch permettent d'obtenir une large gamme de coupes hydrocarbonées à partir du mélange CO + H2, communément appelé gaz de synthèse. L'équation globale de la synthèse Fischer-Tropsch peut s'écrire de la manière suivante :

n CO + (2n+1) H2 → CnH2n+2 + n H2O

Cette synthèse est au cœur des procédés de conversion du gaz naturel, du charbon ou de la biomasse en carburants ou en intermédiaires pour l'industrie chimique. Ces procédés sont appelés GtL (Gas to Liquids selon la terminologie anglo-saxonne) dans le cas de l'utilisation de gaz naturel comme charge initiale, CtL (Coal to Liquids selon la terminologie anglo-saxonne) pour le charbon, et BtL (Biomass to Liquids selon la terminologie anglo-saxonne) pour la biomasse. Dans chacun de ces cas, la charge initiale est tout d'abord gazéifiée en gaz de synthèse, un mélange de monoxyde de carbone et de dihydrogène. Le gaz de synthèse est ensuite purifié et le ratio H2/CO est ajusté en fonction du catalyseur et du procédé utilisés pour la synthèse Fischer-Tropsch. Le gaz de synthèse est ensuite transformé majoritairement en paraffines qui peuvent ensuite être transformées en carburants par un procédé d'hydro-isomérisation-hydrocraquage. Par exemple, des procédés de transformation tels que l'hydrocraquage, le déparaffinage, et l'hydro-isomérisation des coupes lourdes (C16+) permettent de produire différents types de carburants dans la gamme des distillats moyens: gazole (coupe 180-370°C) et kérosène (coupe 140-300°C). Les fractions plus légères C5-C15 peuvent être distillées et utilisées comme solvants.

La réaction de synthèse Fischer-Tropsch peut être réalisée dans différents types de réacteurs (lit fixe, mobile, ou triphasique (gaz, liquide, solide) par exemple dans un réacteur du type colonne à bulles, et les produits de la réaction présentent notamment la caractéristique d'être exempts de composés soufrés, azotés ou de type aromatique.

Les méthodes conventionnelles de préparation des catalyseurs métalliques supportés utilisés pour la synthèse Fischer-Tropsch consistent à déposer un sel métallique ou un complexe de coordination métal-ligand sur le support, puis à réaliser un ou plusieurs traitement(s) thermique(s) réalisé(s) sous air, suivi d'un traitement réducteur effectué ex-situ ou in-situ.

Les catalyseurs employés pour la synthèse Fischer-Tropsch sont essentiellement des catalyseurs à base de cobalt ou de fer, même si d'autres métaux comme le ruthénium ou le nickel peuvent être utilisés. Néanmoins, le cobalt et le fer restent les métaux qui offrent le meilleur compromis à ce jour en termes de performances/coût.

Les propriétés catalytiques (activité, sélectivité, stabilité) dépendent fortement de la taille des cristallites de cobalt présentes en surface du support. Différentes méthodes permettent de contrôler la taille des cristallites. Ainsi l'utilisation de différents sels précurseurs de cobalt (nitrate, acétate, carbonate...), d'additifs complexants lors de l'imprégnation de ces sels, de supports de nature différente (charges de surface, texture, taux d'hydroxylation...), de solvants d'imprégnation de polarité différentes permettent de faire varier fortement la taille et la distribution en taille du métal. Le contrôle des conditions de séchage et de calcination (température, durée, nature du gaz mis en œuvre et son débit, pression) permet également d'obtenir des cristallites d'oxyde de cobalt de tailles variables.

La demande WO 2010/097754 décrit un procédé de préparation de catalyseurs par imprégnation avec une solution contenant un sel organique de cobalt suivie d'une autre imprégnation avec une solution contenant un sel inorganique de cobalt. Ledit procédé permet l'obtention de catalyseurs présentant une dispersion améliorée de cristallites de cobalt ainsi qu'une meilleure activité. Les exemples décrits dans la demande montrent clairement que dans le cas où le cobalt est ajouté par deux imprégnations successives d'un même sel inorganique, l'activité vis-à-vis de la réaction de Fischer-Tropsch est moins bonne. Enfin, aucune mention de la sélectivité en C5+ n'est faite dans ce document.

La demande FR2991199 concerne également les méthodes de préparation d'un catalyseur mettant en oeuvre une étape de séchage rapide et son utilisation pour la synthèse Fischer-Tropsch.

La demanderesse a de manière surprenante découvert qu'un procédé mettant en œuvre un enchainement d'étapes d'imprégnation, séchage et calcination dans des conditions particulières permet d'obtenir un précatalyseur, qui une fois activé par réduction, présente des performances catalytiques améliorées pour la réaction de synthèse Fischer-Tropsch.

### DESCRIPTION SOMMAIRE DE L'INVENTION

L'invention a pour objet un procédé de préparation d'un précatalyseur contenant un support poreux et du cobalt sous forme oxyde, la teneur en cobalt étant comprise entre 5 et 40% poids par rapport au poids du précatalyseur, ledit procédé comprenant au moins les étapes suivantes :
- une première étape a) d'imprégnation du support poreux, par la mise en contact d'au moins une solution comprenant au moins un précurseur inorganique de cobalt à une température comprise entre 5 et 40°C, ladite imprégnation permettant le dépôt de 2 à 15% poids de cobalt par rapport au poids du précatalyseur final,
- une première étape b) de séchage du précatalyseur intermédiaire obtenu à l'issue de l'étape a) d'imprégnation, ledit séchage est mis en œuvre en présence d'un gaz comprenant de l'air et/ou un gaz inerte, avec un débit de gaz par heure et par gramme de précatalyseur intermédiaire issu de l'étape a) (GHSV) compris entre 0,1 et 1,5 NI/h/g, et à une température comprise entre 60 et 110°C,
- une première étape c) de calcination du précatalyseur intermédiaire obtenu à l'issue de l'étape b), ladite calcination est mise en œuvre en présence d'un gaz comprenant de l'air et/ou un gaz inerte, avec un débit de gaz par heure et par gramme de précatalyseur intermédiaire issu de l'étape b) (GHSV) compris entre 0,1 et 1,5 NI/h/g, et à une température comprise entre 200 et 550°C,
- une étape d) d'imprégnation finale du précatalyseur intermédiaire obtenu à l'issue d'une étape précédente de calcination, par la mise en contact dudit précatalyseur intermédiaire avec au moins une solution comprenant au moins un précurseur inorganique de cobalt à une température comprise entre 5 et 40°C, ladite imprégnation permettant d'atteindre la teneur visée en cobalt du précatalyseur,
- une étape e) de séchage finale du précatalyseur intermédiaire obtenu à l'issue de l'étape d) d'imprégnation, ledit séchage est mis en œuvre en présence d'un gaz comprenant de l'air et/ou un gaz inerte, avec un débit de gaz par heure et par gramme de précatalyseur intermédiaire issu de l'étape d) (GHSV) compris entre 1,8 et 6,0 NI/h/g, et à une température comprise entre 110 et 160°C,
- une étape f) de calcination finale du précatalyseur intermédiaire obtenu à l'issue de l'étape e), ladite calcination est mise en œuvre en présence d'un gaz comprenant de l'air et/ou un gaz inerte avec un débit de gaz par heure et par gramme de précatalyseur intermédiaire issu de l'étape e) (GHSV) compris entre 1,5 et 6,0NI/h/g, à une température comprise entre 200 et 550°C.

Sans être liée à une quelconque théorie, les conditions appliquées pour les premières étapes de séchage et de calcination favorisent la formation de grosses cristallites de d'oxyde de cobalt et les conditions des étapes finales de séchage et de calcination favorisent la formation de petites cristallites d'oxyde de cobalt. Généralement, l'oxyde de cobalt est essentiellement sous forme d'oxyde Co₃O₄.

De manière surprenante, il a été observé que le précatalyseur obtenu par le procédé selon l'invention présente, une fois activé par réduction, des performances catalytiques améliorées dans la réaction de Fischer Tropsch, notamment en terme d'activité et de sélectivité en composés hydrocarbures en C5+ (i.e. contenant 5 et plus de 5 atomes de carbone par molécule).

De préférence, les étapes a) et/ou d) d'imprégnation sont réalisées à sec à une température comprise entre 15 et 25°C et de préférence entre 17 et 23°C.

De préférence, l'étape a) d'imprégnation permet le dépôt de 5 à 8% poids de cobalt par rapport au poids du précatalyseur final.

De préférence, le précurseur inorganique de cobalt mis en œuvre à l'étape a) et/ou à l'étape d) est choisi parmi le nitrate de cobalt, le chlorure de cobalt ou l'hydroxyde de cobalt ou le carbonate de cobalt, et de préférence est le nitrate de cobalt.

De préférence, l'étape b) de séchage et/ou l'étape c) de calcination sont mises en œuvre à un débit de gaz par heure et par gramme de précatalyseur intermédiaire (GHSV) comprise entre 0,15 et 1,2 NI/h/g et de préférence entre 0,2 et 0,9 NI/h/g.

De préférence, l'étape b) de séchage est mise en œuvre à une température comprise entre 60 et 100°C et de préférence entre 70 et 90°C.

De préférence, l'étape b) de séchage est mis en œuvre avec au moins une rampe de montée en température comprise 0,05 à 5°C/min, et de préférence comprise entre 0,1 et 2°C/min, et avec une durée de palier à la température de séchage comprise entre 1 et 12h, et de préférence comprise entre 2 et 6h.

De préférence, l'étape c) et/ou f) de calcination sont mises en œuvre à une température comprise entre 250 et 500°C et de préférence entre 300 et 450°C.

De préférence, l'étape c) est mise en œuvre avec au moins une rampe de montée en température comprise entre 3 et 20°C/min, et de préférence comprise entre 5 et 15°C/min, et avec une durée de palier à la température de calcination comprise entre 1 et 12h, et de préférence comprise entre 2 et 4h.

De préférence, l'étape d) d'imprégnation permet le dépôt de 5 à 8% poids de cobalt par rapport au poids du précatalyseur final.

De préférence, la teneur en cobalt est comprise entre 10 et 30% poids par rapport au poids du précatalyseur final.

Dans un mode réalisation particulier, l'étape e) de séchage et/ou l'étape f) de calcination sont mises en œuvre à un débit de gaz par heure et par gramme de précatalyseur intermédiaire issu de l'étape précédente (GHSV) comprise entre 1,9 et 5,5 NI/h/g et de préférence entre 2,0 et 5,0 NI/h/g.

De préférence, l'étape e) de séchage est mise en œuvre avec au moins une rampe de montée en température comprises entre 0,05 et 5,0°C, et de préférence comprises entre 0,1 et 2,0°C/min, et avec une durée de palier à la température de séchage comprise 2 et 16h, et de préférence comprise entre 3 et 8h.

De préférence, l'étape e) de séchage est mise en œuvre à une température comprise entre 110 et 140°C.

De préférence, l'étape f) est mise en œuvre avec au moins un rampe de montée en température comprise 0,05 et 1,5°C/min, de préférence comprises entre 0,1 et 1,2°C/min, et avec une durée de palier à la température de calcination comprise 2 et 16h, et de préférence comprises entre 3 et 6h.

De préférence le procédé comprend, préférentiellement est constitué, des étapes suivantes :
- une première étape a) d'imprégnation du support poreux, , par la mise en contact d'au moins une solution comprenant au moins un précurseur inorganique de cobalt à une température comprise entre 5 et 40°C, ladite imprégnation permettant le dépôt de 2 à 15% poids de cobalt par rapport au poids du précatalyseur final,
- une première étape b) de séchage du précatalyseur intermédiaire obtenu à l'issue de l'étape a) d'imprégnation, ledit séchage est mis en œuvre en présence d'un gaz comprenant de l'air et/ou un gaz inerte, avec un débit de gaz par heure et par gramme de précatalyseur intermédiaire issu de l'étape a) (GHSV) compris entre 0,1 et 1,5 NI/h/g, et à une température comprise entre 60 et 110°C,
- une première étape c) de calcination du précatalyseur intermédiaire obtenu à l'issue de l'étape b), ladite calcination est mise en œuvre en présence d'un gaz comprenant de l'air et/ou un gaz inerte, avec un débit de gaz par heure et par gramme de précatalyseur intermédiaire issu de l'étape b) (GHSV) compris entre 0,1 et 1,5 NI/h/g, et à une température comprise entre 200 et 550°C,
- une étape d) d'imprégnation finale du précatalyseur intermédiaire obtenu à l'issue de l'étape c) de calcination, par la mise en contact dudit précatalyseur intermédiaire avec au moins une solution comprenant au moins un précurseur inorganique de cobalt à une température comprise entre 5 et 40°C, ladite imprégnation permettant d'atteindre la teneur visée en cobalt du précatalyseur,
- une étape e) de séchage finale du précatalyseur intermédiaire obtenu à l'issue de l'étape d) d'imprégnation, ledit séchage est mis en œuvre en présence d'un gaz comprenant de l'air et/ou un gaz inerte, avec un débit de gaz par heure et par gramme de précatalyseur intermédiaire issu de l'étape d) (GHSV) compris entre 1,8 et 6,0 NI/h/g, et à une température comprise entre 110 et 160°C,
- une étape f) de calcination finale du précatalyseur intermédiaire obtenu à l'issue de l'étape e), ladite calcination est mise en œuvre en présence d'un gaz comprenant de l'air et/ou un gaz inerte à un débit de gaz par heure et par gramme de précatalyseur intermédiaire issu de l'étape e) (GHSV) compris entre 1,5 et 6,0 NI/h/g, à une température comprise entre 200 et 550°C.

La présente invention concerne également un précatalyseur susceptible d'être obtenu par le procédé de préparation de l'invention.

Le précatalyseur obtenu par le procédé de préparation de l'invention est soumis à une étape d'activation par réduction mise en œuvre en présence d'un ou plusieurs gaz réducteur, à une température comprise entre 300 et 500°C, pendant une durée comprise entre 2 et 20h, et à des pressions absolues comprises entre 0,1 et 1 MPa.

Un procédé de synthèse Fischer-Tropsch dans lequel le catalyseur obtenu par le procédé de préparation de l'invention est mis en contact avec un gaz de synthèse contenant de l'hydrogène et du monoxyde de carbone, à une pression totale comprise entre 0,1 et 55 MPa, à une température comprise entre 180 et 280°C, à une vitesse volumique horaire comprise entre 100 et 20000 volumes de gaz de synthèse par volume de catalyseur et par heure (100 à 20000 h-1) peut avantageusement être mis en oeuvre.

### DEFINITIONS & ABBREVIATIONS

Il est précisé que, dans toute cette description, l'expression « compris(e) entre ... et ... » doit s'entendre comme incluant les bornes citées.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

Les propriétés texturales et structurales du support et du précatalyseur décrits ci-après sont déterminées par les méthodes de caractérisation connues de l'homme du métier. Le volume poreux total et la distribution poreuse sont déterminés dans la présente invention par porosimétrie à l'azote tel que décrit dans l'ouvrage « Adsorption by powders and porous solids. Principles, methodology and applications » écrit par F. Rouquérol, J. Rouquérol et K. Sing, Academic Press, 1999.

On entend par surface spécifique, la surface spécifique BET (SBET en m2/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309.

On entend par précatalyseur, le solide obtenu à l'issue de l'ensemble des étapes du procédé selon l'invention.

On entend par précatalyseur intermédiaire, le solide obtenu durant le procédé selon l'invention et devant subir une étape ultérieur de transformation.

On entend par catalyseur, le solide obtenu à l'issue d'une étape d'activation par réduction du précatalyseur.

On entend par GHSV, le débit de gaz par heure et par gramme de solide mis en œuvre à une étape donnée.

On entend par oxyde de cobalt, le cobalt sous forme CoO et/ou sous forme Co₃O₄.

On entend par hydrocarbures en C5+, les hydrocarbures contenant 5 et plus de 5 atomes de carbone par molécule

### DESCRIPTION DETAILLEE DE L'INVENTION

Le procédé selon la présente invention est un procédé de préparation d'un précatalyseur contenant un support poreux et du cobalt sous forme oxyde, la teneur en cobalt étant comprise entre 5 et 40% poids par rapport au poids du précatalyseur, ledit procédé comprenant au moins les étapes suivantes :
- une première étape a) d'imprégnation du support poreux, par la mise en contact d'au moins une solution comprenant au moins un précurseur inorganique de cobalt à une température comprise entre 5 et 40°C, ladite imprégnation permettant le dépôt de 2 à 15% poids de cobalt par rapport au poids du précatalyseur final,
- une première étape b) de séchage du précatalyseur intermédiaire obtenu à l'issue de l'étape a) d'imprégnation, ledit séchage est mis en œuvre en présence d'un gaz comprenant de l'air et/ou un gaz inerte, avec un débit de gaz par heure et par gramme de précatalyseur intermédiaire issu de l'étape a) (GHSV) compris entre 0,1 et 1,5 NI/h/g, et à une température comprise entre 60 et 110°C,
- une première étape c) de calcination du précatalyseur intermédiaire obtenu à l'issue de l'étape b), ladite calcination est mise en œuvre en présence d'un gaz comprenant de l'air et/ou un gaz inerte, avec un débit de gaz par heure et par gramme de précatalyseur intermédiaire issu de l'étape b) (GHSV) compris entre 0,1 et 1,5 NI/h/g, et à une température comprise entre 200 et 550°C,
- une étape d) d'imprégnation finale du précatalyseur intermédiaire obtenu à l'issue d'une étape précédente de calcination, par la mise en contact dudit précatalyseur intermédiaire avec au moins une solution comprenant au moins un précurseur inorganique de cobalt à une température comprise entre 5 et 40°C, ladite imprégnation permettant d'atteindre la teneur visée en cobalt du précatalyseur,
- une étape e) de séchage finale du précatalyseur intermédiaire obtenu à l'issue de l'étape d) d'imprégnation, ledit séchage est mis en œuvre en présence d'un gaz comprenant de l'air et/ou un gaz inerte, avec un débit de gaz par heure et par gramme de précatalyseur intermédiaire issu de l'étape d) (GHSV) compris entre 1,8 et 6,0 NI/h/g, et à une température comprise entre 110 et 160°C,
- une étape f) de calcination finale du précatalyseur intermédiaire obtenu à l'issue de l'étape e), ladite calcination est mise en œuvre en présence d'un gaz comprenant de l'air et/ou un gaz inerte avec un débit de gaz par heure et par gramme de précatalyseur intermédiaire issu de l'étape e) (GHSV) compris entre 1,5 et 6,0 NI/h/g, à une température comprise entre 200 et 550°C.

### Support poreux

Le support poreux du précatalyseur selon l'invention peut comprendre au moins un oxyde réfractaire choisi dans le groupe constitué par les oxydes de magnésium, d'aluminium, de silicium, de zirconium, de thorium, ou de titane, pris seul ou en mélange entre eux ou avec d'autres oxydes. De préférence, le support poreux est une alumine, une silice ou une silice-alumine et de manière particulièrement préférée le support est constitué de silice-alumine. Lorsque le support poreux comprend de l'alumine, il contient plus de 50 % poids d'alumine par rapport au poids du support. L'alumine peut être présente sous une forme cristallographique de type alumine gamma, delta, thêta, alpha, prises seules ou en mélange.

Dans un cas préféré, le support poreux comprend de la silice. Dans ce cas, il contient plus de 50 % poids de silice par rapport au poids du support.

Dans un autre cas préféré, le support poreux comprend une silice-alumine. On entend par un support poreux comprenant une silice-alumine un support dans lequel le silicium et l'aluminium est sous forme d'agglomérats de silice ou d'alumine respectivement, d'aluminosilicate amorphe ou toute autre phase mixte contenant du silicium et de l'aluminium, étant entendu que le support n'est pas mésostructuré. De préférence, l'alumine et la silice sont présents sous forme de mélange d'oxydes SiO₂-Al₂O₃. La teneur en silice dans le support silice-alumine varie de 0,5% poids à 30% poids, de manière préférée de 1% poids à 25% poids, et de manière encore plus préférée de 1,5 à 20% poids par rapport au poids du support.

De préférence, le support poreux présente une surface BET comprise entre 5 et 300 m²/g, de façon encore plus avantageuse entre 50 et 250 m²/g. La surface spécifique BET est mesurée par physisorption à l'azote. Le volume poreux total du support est généralement compris entre 0,1 et 1,5 cm³/g, de préférence est compris entre 0,4 et 1 cm³/g, et dont au moins 50% du volume poreux est un volume poreux intra-granulaire. Le volume poreux total est mesuré par porosimétrie au mercure selon la norme ASTM D4284-92 avec un angle de mouillage de 140°, par exemple au moyen d'un appareil modèle Autopore III de la marque Microméritics.

Le support poreux peut être mis en forme de billes, d'extrudés, de pastilles, de poudre micrométrique, d'agglomérats irréguliers et non sphériques dont la forme spécifique peut résulter d'une étape de concassage. De manière avantageuse, ledit support poreux se présente sous forme de poudre micrométrique avec des tailles de grains comprises entre 1 et 1000 µm, de manière préférée entre 20 et 200 µm.

### Première étape a) d'imprégnation du support poreux

Conformément à l'invention, le procédé de préparation du précatalyseur comprend une première étape a) d'imprégnation d'un support poreux, choisi de préférence parmi la silice, l'alumine ou la silice alumine, par la mise en contact d'au moins une solution comprenant au moins un précurseur inorganique de cobalt à une température comprise entre 5 et 40°C, ladite imprégnation permettant le dépôt de 2 à 15% poids de cobalt par rapport au poids du précatalyseur final.

En particulier, ladite première étape a) d'imprégnation peut avantageusement être réalisée par imprégnation à sec ou par imprégnation en excès, selon des méthodes bien connues de l'Homme du métier. Ladite première étape a) d'imprégnation est réalisée par la mise en contact dudit support poreux avec au moins une solution comprenant au moins un précurseur inorganique de cobalt, dont le volume est égal au volume poreux dudit support poreux à imprégner. Ladite solution aqueuse ou organique et de préférence aqueuse contient le ou les précurseurs inorganiques de cobalt à la concentration voulue pour obtenir sur le précatalyseur intermédiaire une teneur en cobalt inférieure à la teneur totale visée sur le précatalyseur final.

Conformément à l'invention le cobalt est mis en contact du support par l'intermédiaire de tout précurseur inorganique de cobalt soluble en phase aqueuse ou organique et de préférence en phase aqueuse. De manière préférée, le précurseur de cobalt qui est introduit en solution aqueuse ou organique, est de préférence sous forme de nitrate, de chlorure, de carbonate ou d'hydroxyde. De préférence, ladite solution de précurseur de cobalt est aqueuse. Le précurseur de cobalt utilisé est de préférence le nitrate de cobalt.

Ladite première étape d'imprégnation est réalisée entre 5 et 40°C, de manière préférée entre 15 et 25°C, et de manière très préférée entre 17 et 23°C.

La première étape a) d'imprégnation dudit support poreux permet le dépôt de 2 à 15% poids de cobalt par rapport au poids du précatalyseur final et de préférence de 5 à 8% poids.

Ladite première étape d'imprégnation du support du catalyseur préparé selon l'invention, peut également avantageusement comprendre au moins une étape supplémentaire consistant à déposer au moins un métal additionnel choisi parmi le platine, le palladium, le rhénium, le rhodium, le ruthénium, le manganèse et le tantale, seul ou en mélange, sur ledit support oxyde. De manière préférée, le métal additionnel est choisi parmi le platine, le ruthénium et le rhénium et de manière très préférée, le métal additionnel est le platine. Le dépôt du métal additionnel sur le support peut avantageusement être réalisé par toute méthode connue de l'Homme du métier, préférentiellement par imprégnation dudit support oxyde par au moins une solution contenant au moins un précurseur dudit métal additionnel, et de préférence, par imprégnation à sec ou par imprégnation en excès. Le métal additionnel peut être imprégné simultanément avec le cobalt.

### Première étape b) de séchage du précatalvseur intermédiaire obtenu à l'étape a)

Conformément à l'invention, le procédé de préparation du précatalyseur comprend une première étape b) de séchage du précatalyseur intermédiaire obtenu à l'issue de l'étape a) d'imprégnation.

La première étape de séchage b) peut être mise en œuvre par tout moyen connu de l'Homme du métier et permet l'obtention d'un précatalyseur intermédiaire séché.

Avantageusement, la première étape b) de séchage permet l'élimination du solvant de la solution d'imprégnation mise en œuvre à l'étape a). Ladite première étape b) de séchage peut être mise en œuvre en lit fixe, en lit fluidisé, ou en four tournant en présence d'air ou de gaz inerte comme l'argon, l'azote ou l'hélium. Elle est avantageusement effectuée à pression atmosphérique ou à pression réduite. De manière préférée, ladite étape de séchage est réalisée à pression atmosphérique. Elle est avantageusement effectuée en lit traversé. De manière très préférée, le séchage est réalisée en lit traversé en présence d'azote et/ou d'air.

Selon l'invention, le débit de gaz par heure et par gramme de précatalyseur intermédiaire issu de l'étape a) (GHSV) utilisée lors de la première étape b) de séchage sur le précatalyseur intermédiaire issu de la première étape a) d'imprégnation est comprise entre 0,1 et 1,5 NI/h/(g de précatalyseur intermédiaire issu de l'étape a) d'imprégnation), de préférence entre 0,15 et 1,2 NI/h/g et très préférentiellement entre 0,2 et 0,9 NI/h/g.

Ladite étape b) est réalisée à une température comprise 60 et 110°C, de préférence entre 70 et 90°C avec éventuellement des rampes de montée en température comprises 0,05 à 5,0°C/min, de préférence comprises entre 0,1 et 2°C/min. L'étape de séchage peut également se dérouler avec au moins une durée de palier à la température de séchage comprise entre 1 et 12h, de préférence entre 2 et 6h.

### Première étape c) de calcination du précatalyseur intermédiaire obtenu à l'étape b)

Conformément à l'invention, le procédé de préparation d'un précatalyseur comprend une première étape c) de calcination du précatalyseur intermédiaire obtenu à l'issue de l'étape b) de séchage. Ladite première étape c) de calcination peut être réalisée en lit fixe, en lit fluidisé, ou en four tournant en présence d'air ou de gaz inerte comme l'argon, l'azote ou l'hélium. Elle est avantageusement effectuée à pression atmosphérique ou à pression réduite. De manière préférée, l'étape c) est réalisée à pression atmosphérique. Elle est avantageusement effectuée en lit traversé. De manière très préférée, l'étape de calcination est réalisée en lit traversé en présence d'azote et/ou d'air.

Avantageusement la première étape c) de calcination est réalisée sans déchargement du catalyseur après l'étape b) de séchage dans le cas où lesdites étapes b) et c) sont mises en œuvre dans le même outil.

Selon l'invention, le débit de gaz par heure et par gramme de précatalyseur intermédiaire issu de l'étape b) (GHSV) utilisée lors de l'étape c) de calcination du précatalyseur intermédiaire issu de l'étape b) de séchage est compris entre 0,1 et 1,5 NI/h/(g de précatalyseur intermédiaire issu de l'étape b) de séchage), de préférence entre 0,15 et 1,2 NI/h/g et très préférentiellement entre 0,2 et 0,9 NI/h/g.

L'étape c) de calcination est réalisée à une température comprise entre 200 et 550°C, de préférence 250 et 500°C et très préférentiellement entre 300 et 450°C et en mettant en œuvre éventuellement des rampes de montée en température comprises entre 3 et 20°C/min, de préférence comprises entre 5 et 15°C/min. L'étape de calcination peut aussi être mis en œuvre avec au moins palier à la température de calcination et dont la durée est comprise entre 1 et 12h, de préférence comprise entre 2 et 4h.

Le cobalt contenu dans le précatalyseur intermédiaire obtenu à l'issue des étapes a), b), et c) est sous forme oxyde. Le solide présente donc des cristallites d'oxyde de cobalt supportées, l'oxyde de cobalt étant très majoritairement sous forme Co₃O₄. On entend par très majoritairement, que 95% poids du cobalt est présent sous la forme Co₃O₄.

### Etape d) d'imprégnation finale du précatalvseur intermédiaire obtenu à une étape précédente de calcination

Conformément à l'invention, le procédé de préparation de catalyseur comprend une étape d) d'imprégnation finale de cobalt sur le précatalyseur intermédiaire obtenu à l'issue d'une étape précédente de calcination, de préférence à l'issue de l'étape c). L'ajout de cobalt sur le support poreux est effectué par imprégnation sur le support poreux d'au moins une solution contenant au moins un précurseur inorganique de cobalt.

Ladite étape d) d'imprégnation finale peut avantageusement être réalisée par imprégnation à sec ou par imprégnation en excès ou selon toutes autres méthodes connues de l'Homme du métier. De manière préférée, ladite étape d'imprégnation est réalisée par imprégnation à sec, de préférence à une température comprise entre 5 et 40°C, de préférence entre 15 et 25°C, et de manière préférée entre 17 et 23°C et de manière très préférée à une température égale à 20°C.

Ladite étape d) d'imprégnation finale est réalisée de manière à atteindre la teneur visée en cobalt sur le précatalyseur final.

Conformément à l'invention le précurseur inorganique de cobalt est un composé inorganique, qui est de préférence choisi parmi le nitrate de cobalt, de chlorure, de carbonate ou d'hydroxyde et très préférentiellement le composé inorganique est le nitrate de cobalt.

Avantageusement, le cobalt est mis au contact du support poreux par l'intermédiaire d'une solution aqueuse de nitrate de cobalt.

Ladite étape d'imprégnation du support poreux du précatalyseur préparé selon l'invention, peut avantageusement comprendre au moins une étape supplémentaire consistant à déposer au moins un métal additionnel choisi parmi le platine, le palladium, le rhénium, le rhodium, le ruthénium, le manganèse et le tantale, seul ou en mélange, sur ledit support oxyde. De manière préférée, le métal additionnel est choisi parmi le platine, le ruthénium et le rhénium et de manière très préférée, le métal additionnel est le platine. Le dépôt du métal additionnel sur le support peut avantageusement être réalisé par toute méthode connue de l'Homme du métier, préférentiellement par imprégnation dudit support oxyde par au moins une solution contenant au moins un précurseur dudit métal additionnel, et de préférence, par imprégnation à sec ou par imprégnation en excès. Le métal additionnel peut être imprégné simultanément avec le cobalt.

De préférence, l'étape d) d'imprégnation finale dudit support poreux permet le dépôt de 2 à 15% poids et de préférence de 5 à 8% poids de cobalt par rapport au poids du précatalyseur final.

### Étape e) de séchage finale du précatalvseur intermédiaire obtenu à l'étape d)

Conformément à l'invention, le procédé de préparation de catalyseur comprend une étape e) de séchage finale du précatalyseur intermédiaire obtenu à l'issue de l'étape d) d'imprégnation finale.

L'étape e) de séchage finale peut être mise en œuvre par tout moyen connu de l'Homme du métier et permet l'obtention d'un précatalyseur intermédiaire séché.

Avantageusement, l'étape e) de séchage finale permet l'élimination du solvant de la solution d'imprégnation mise en œuvre à l'étape d).

Plus particulièrement, ladite étape de séchage peut être mise en œuvre en lit fixe, en lit fluidisé, ou en four tournant en présence d'air ou de gaz inerte comme l'argon, l'azote ou l'hélium. Elle est avantageusement effectuée à pression atmosphérique ou à pression réduite. De manière préférée, cette étape est réalisée à pression atmosphérique. De manière très préférée, le séchage est réalisé en lit traversé en présence d'azote et/ou d'air.

Selon l'invention, le débit de gaz par heure et par gramme de précatalyseur intermédiaire issu de l'étape d) d'imprégnation (GHSV) utilisée lors de l'étape e) de séchage sur le précatalyseur intermédiaire issu de la première étape d) d'imprégnation est comprise entre 1,8 et 6,0 NI/h/g de précatalyseur intermédiaire obtenu à l'issue de l'étape d) d'imprégnation, de préférence entre 1,9 et 5,5 NI/h/g et très préférentiellement entre 2,0 et 5,0 NI/h/g.

Ladite étape e) de séchage finale est réalisée à une température comprise 110 et 160°C et de préférence entre 110 et 140°C. Cette étape de séchage peut mettre en œuvre une ou plusieurs rampes de montée en température comprises entre 0,05 et 5,0°C/min, et de préférence comprises entre 0,1 et 2,0°C/min. Elle peut aussi être réalisée avec au moins un palier à la température de séchage qui est généralement comprise entre 2 et 16h, de préférence comprise entre 3 et 8h.

### Étape f) de calcination finale du précatalyseur intermédiaire obtenu à l'étape e)

Conformément à l'invention, le procédé de préparation de catalyseur comprend une étape f) de calcination finale du précatalyseur intermédiaire obtenu à l'issue de l'étape e) de séchage finale.

Ladite étape f) de calcination finale peut être réalisée en lit fixe, en lit fluidisé, ou en four tournant en présence d'air ou de gaz inerte comme l'argon, l'azote ou l'hélium. Elle est avantageusement effectuée à pression atmosphérique ou à pression réduite. De manière préférée, cette étape f) est réalisée à pression atmosphérique. De manière préférée, lorsque l'étape de calcination est effectuée en lit fixe, le gaz utilisé est soit l'air, soit un gaz inerte comme l'argon, l'azote ou l'hélium. De manière très préférée, l'étape de calcination est réalisée en lit traversé en présence d'azote et/ou d'air.

Avantageusement l'étape f) de calcination finale peut être réalisée sans déchargement du catalyseur après l'étape e) de séchage dans le cas où lesdites étapes e) et f) sont mises en œuvre dans le même outil.

Selon l'invention, le débit de gaz par heure et par gramme de précatalyseur intermédiaire issu de l'étape e) (GHSV) utilisée lors de l'étape f) de calcination sur le précatalyseur intermédiaire issu de l'étape e) de séchage est comprise entre 1,5 et 6,0 NI/h/g de précatalyseur intermédiaire issu de l'étape e) de séchage, de préférence entre 1,9 et 5,5 NI/h/g et très préférentiellement entre 2,0 et 5,0 NI/h/g. L'étape f) de calcination finale est réalisée à des températures comprises entre 200 et 550°C, de préférence 250 et 500 °C et très préférentiellement entre 300 et 450°C. L'étape de calcination peut employer une ou plusieurs rampes de montée en température comprises entre 0,05 et 1,5°C/min, de préférence comprises entre 0,1 et 1,2°C/min. On peut également appliquer au moins un palier à la température de calcination dont la durée est comprise entre 2 et 16h, de préférence comprise entre 3 et 6h.

Le précatalyseur obtenu à l'issue du procédé de préparation selon la présente invention se trouve sous forme oxyde après l'enchainement des étapes d'imprégnation, séchage et calcination. Ledit précatalyseur présente donc des cristallites d'oxyde de cobalt supportées.

Il est à noter que le procédé selon l'invention n'exclut pas la présence d'autres étapes intermédiaires additionnelles d'imprégnation du cobalt, de séchage et de calcination qui sont effectuées entre les étapes c) et d).

Selon l'invention, la teneur finale en cobalt du précatalyseur final est comprise entre 5 et 40% poids de cobalt, de préférence comprise entre 10 et 30% poids de cobalt par rapport au poids total de précatalyseur final.

Dans un mode préféré de l'invention, le procédé est conduit de sorte que la teneur finale en cobalt soit atteinte en deux étapes d'imprégnation du cobalt, donc en réalisant successivement les étapes a), b), c), d), e) et f).

### Mise en œuvre du précatalyseur dans un procédé de synthèse Fischer-Tropsch

Préalablement à son utilisation dans un réacteur catalytique pour la synthèse Fischer Tropsch, ledit précatalyseur obtenu par le procédé selon la présente invention est soumis à au moins une étape d'activation par réduction. Ladite étape de réduction est destinée à former des particules de métal de cobalt à l'état zéro valent, et est réalisée à haute température en présence d'au moins un gaz réducteur par exemple contenant de l'hydrogène, pur ou dilué par un gaz inerte.

L'étape de réduction permet de réaliser la réaction suivante:

Co3O4 → CoO → Co(0)

Ladite étape de réduction est opérée à une température comprise entre 300 et 500°C et pendant une durée comprise entre 2 et 2h. Elle est généralement réalisée dans un réacteur lit fixe ou lit fluidisé à des pressions absolues comprises entre 0,1 et 1 MPa.

A l'issue de l'étape de réduction, le catalyseur activé est généralement protégé de tout environnement oxydant. A cette fin, ledit catalyseur activité peut être déchargé du réacteur de réduction, éventuellement sous atmosphère inerte, dans un solvant organique afin d'éviter sa réoxydation avant d'être engagé dans la réaction Fischer-Tropsch.

Le catalyseur activé (sous forme réduite) est avantageusement mis en œuvre dans un procédé de synthèse Fischer-Tropsch qui conduit à la production d'hydrocarbures essentiellement linéaires et saturés C5+ (ayant au moins 5 atomes de carbone par molécule) à partir de gaz de synthèse. Les hydrocarbures produits par le procédé de l'invention sont de préférence des hydrocarbures essentiellement paraffiniques, dont la fraction présentant les points d'ébullition les plus élevés peut être convertie avec un rendement élevé en distillats moyens (coupes gasoil et kérosène) par un procédé d'hydroconversion tel que l'hydrocraquage et/ou l'hydroisomérisation catalytique(s).

La charge employée pour la mise en œuvre du procédé de synthèse Fischer-Tropsch est un gaz de synthèse comprenant notamment du monoxyde de carbone et d'hydrogène et ayant un rapport molaire H₂/CO compris entre 0,5 et 4 et de préférence compris entre 1,6 et 2,2. Le gaz de synthèse est par exemple obtenu à partir d'un procédé de vaporeformage d'hydrocarbures ou d'alcool. ou à partir d'un procédé d'oxydation partielle d'hydrocarbures (e.g. méthane), ou encore à partir d'un procédé de reformage autotherme d'hydrocarbures (e.g.méthane) ou enfin à partir d'un procédé de gazéification du charbon.

Le catalyseur utilisé dans le procédé de synthèse d'hydrocarbures peut être mis en œuvre dans différents types de réacteurs, par exemple en lit fixe, en lit mobile, en lit bouillonnant ou encore en lit fluidisé triphasique. La mise en œuvre du catalyseur en suspension dans un réacteur fluidisé triphasique, préférentiellement de type colonne à bulle, est préférée. Dans cette mise en œuvre préférée du catalyseur, ledit catalyseur est divisé à l'état de poudre très fine, particulièrement de l'ordre de quelques dizaines de microns, cette poudre formant une suspension avec le milieu réactionnel. Cette technologie est également connue sous la terminologie de procédé "slurry" par l'homme du métier. Le procédé de synthèse d'hydrocarbures est mis en œuvre en présence de gaz de synthèse, à une pression totale comprise entre 0,1 et 15 MPa, de préférence entre 0,5 et 10 MPa, à une température comprise entre 150 et 350°C, de préférence entre 180 et 250°C. La vitesse volumique horaire est avantageusement comprise entre 100 et 20000 volumes de gaz de synthèse par volume de catalyseur et par heure (100 à 20000 h-1) et de préférence entre 400 et 10000 volumes de gaz de synthèse par volume de catalyseur et par heure (400 à 10000 h⁻¹).

### Exemples

Les exemples qui suivent démontrent les gains en performances des catalyseurs selon l'invention.

La teneur en cobalt sur le précatalyseur final est déterminée par fluorescence X.

La taille moyenne de cristallites de cobalt sous forme de Co₃O₄ est calculée à partir de l'équation de Scherrer, appliquée au pic le plus intense (3 1 1) de diffraction (2θ = 26,9°) des rayons X appliqués à l'échantillon.

### Exemple 1 : Précatalyseur A2 selon l'invention

Un précatalyseur intermédiaire A1 comprenant du cobalt déposé sur un support de silice-alumine est préparé par une première imprégnation à sec, à une température de 20°C, d'une solution aqueuse de nitrate de cobalt de manière à déposer de l'ordre de 8% poids de cobalt sur une poudre de silice alumine (Siralox5™) de granulométrie moyenne égale à 80 µm, de surface spécifique 170 m²/g et de volume poreux mesuré par isotherme d'adsorption d'azote à 0,55 ml/g.

Après une première imprégnation à sec, le précatalyseur intermédiaire est soumis à une première étape de séchage dans un réacteur en lit fluidisé sous air à une GHSV de 0,7 NI/h/g de précatalyseur intermédiaire. La température est amenée de 20 à 80°C avec une rampe de 1,5°C/min. La température est maintenue à 80°C pendant 4h. La température du précatalyseur intermédiaire est ensuite amenée à 400°C avec une rampe de 15°C/min sous une GHSV de 0,7 NI/h/g de support. La température de 400°C est maintenue pendant 4h. Le précatalyseur intermédiaire A1 contient environ 8% poids de cobalt par rapport au poids du précatalyseur intermédiaire.

Le précatalyseur intermédiaire A1 est soumis à une étape finale d'imprégnation à sec, à une température de 20°C, au moyen d'une solution aqueuse de nitrate de cobalt. Le précatalyseur intermédiaire est séché dans un réacteur en lit fluidisé sous air à une GHSV de 3 NI/h/g de précatalyseur intermédiaire en amenant la température de 20 à 120°C avec une rampe de 1,5°C/min. La température est ensuite maintenue à 120°C pendant 4h. La température du précatalyseur intermédiaire est ensuite amenée à 400°C avec une rampe de 1°C/min sous une GHSV de 3 NI/h/g de précatalyseur intermédiaire. La température est maintenue à 400°C pendant 4h. Cette étape finale de calcination permet l'obtention du précatalyseur A2 final contenant 15% poids de cobalt par rapport au poids du précatalyseur A2.

Pour obtenir un catalyseur A actif dans la réaction de Fischer-Tropsch, le précatalyseur A2 est soumis à une étape d'activation par réduction sous hydrogène pur à 400°C pendant 16h, sous une GHSV de 2 NI/h/g de précatalyseur A2.

### Exemple 2 : Précatalyseur B2 (comparatif)

Un précatalyseur intermédiaire B1 comprenant du cobalt déposé sur un support de silice-alumine est préparé par une première imprégnation à sec, à une température de 20°C, d'une solution aqueuse de nitrate de cobalt de manière à déposer de l'ordre de 8% poids de cobalt sur une poudre de silice alumine (Siralox5™) de granulométrie moyenne égale à 80 µm, de surface spécifique 170 m²/g et de volume poreux mesuré par isotherme d'adsorption d'azote à 0,55 ml/g.

Après une première imprégnation à sec, le précatalyseur intermédiaire est séché dans un réacteur en lit fluidisé sous air à une GHSV de 0,7 NI/h/g de précatalyseur intermédiaire. La température est amenée de 20 à 80°C avec une rampe de 1.5°C/min. La température est maintenue à 80°C pendant 4h. La température du précatalyseur intermédiaire est ensuite amenée à 400°C avec une rampe de 15°C/min sous une GHSV de 0,7 NI/h/g de précatalyseur intermédiaire. La température est maintenue à 400°C pendant 4h. Le précatalyseur intermédiaire B1 contient environ 8% poids de cobalt par rapport au poids du précatalyseur intermédiaire.

Le précatalyseur intermédiaire B1 est soumis à une étape finale d'imprégnation à sec, à une température de 20°C, au moyen d'une solution aqueuse de nitrate de cobalt. Le précatalyseur intermédiaire est séché dans un réacteur en lit fluidisé sous air à une GHSV de 0,7 NI/h/g de précatalyseur intermédiaire. La température est amenée de 20 à 80°C avec une rampe de 1,5°C/min. La température est maintenue à 80°C pendant 4h. La température du précatalyseur intermédiaire est ensuite amenée à 400°C avec une rampe de 15°C/min sous une GHSV de 0,7 NI/h/g de précatalyseur intermédiaire. La température est maintenue à 400°C pendant 4h. Cette étape finale de calcination permet l'obtention du précatalyseur B2 final contenant 15% poids de cobalt par rapport au poids du précatalyseur B2.

Pour obtenir un catalyseur B actif dans la réaction de Fischer-Tropsch, le précatalyseur B2 est soumis à une activation par réduction sous hydrogène pur à 400°C pendant 16h, sous une GHSV de 2 NI/h/g de précatalyseur B2.

### Exemple 3 : Précatalyseur C2 (comparatif)

Un précatalyseur intermédiaire C1 comprenant du cobalt déposé sur un support de silice-alumine est préparé par une première imprégnation à sec, à une température de 20°C, d'une solution aqueuse de nitrate de cobalt de manière à déposer de l'ordre de 8% poids d'oxyde de cobalt sur une poudre de silice alumine (Siralox5™) de granulométrie moyenne égale à 80 µm, de surface 170 m²/g et de volume poreux mesuré par isotherme d'adsorption d'azote à 0,55 ml/g.

Après une première imprégnation à sec, le précatalyseur intermédiaire est séché dans un réacteur en lit fluidisé sous air à une GHSV de 3 NI/h/g de précatalyseur intermédiaire. La température est amenée de 20 à 120°C avec une rampe de 1,5°C/min. La température est maintenue à 120°C pendant 4h. La température du précatalyseur intermédiaire est ensuite amenée à 400°C avec une rampe de 1°C/min sous une GHSV de 3 NI/h/g de précatalyseur intermédiaire. La température est maintenue à 400°C pendant 4h. Le précatalyseur intermédiaire C1 contient environ 8% poids de cobalt par rapport au poids du précatalyseur intermédiaire.

Le précatalyseur intermédiaire C1 est soumis à une étape finale d'imprégnation à sec, à une température de 20°C, au moyen d'une solution aqueuse de nitrate de cobalt. Le précatalyseur intermédiaire est séché dans un réacteur en lit fluidisé sous air à une GHSV de 0,7 NI/h/g de précatalyseur intermédiaire. La température est amenée de 20 à 80°C avec une rampe de 1,5°C/min. La température est maintenue à 80°C pendant 4h. La température du précatalyseur intermédiaire est ensuite amenée à 400°C avec une rampe de 15°C/min sous une GHSV de 0,7 NI/h/g de précatalyseur intermédiaire. La température est maintenue 400°C pendant 4h. Cette étape finale de calcination permet l'obtention du précatalyseur C2 final contenant 15% poids de cobalt par rapport au poids du précatalyseur C2 final.

Pour obtenir un catalyseur C actif dans la réaction de Fischer-Tropsch, le précatalyseur C2 est soumis à une activation par réduction sous hydrogène pur à 400°C pendant 16h, sous une GHSV de 2 NI/h/g de précatalyseur C2.

### Exemple 4 : Précatalyseur D2 (comparatif)

Un précatalyseur intermédiaire D1 comprenant du cobalt déposé sur un support de silice-alumine est préparé par imprégnation à sec, à une température de 20°C, d'une solution aqueuse de nitrate de cobalt de manière à déposer de l'ordre de 8% poids d'oxyde de cobalt sur une poudre de silice alumine (Siralox5™) de granulométrie moyenne égale à 80 µm, de surface 170 m²/g et de volume poreux mesuré par isotherme d'adsorption d'azote à 0,55 ml/g.

Après une première imprégnation à sec, le précatalyseur intermédiaire est séché dans un réacteur en lit fluidisé sous air à une GHSV de 3 NI/h/g de précatalyseur intermédiaire. La température est amenée de 20 à 120°C avec une rampe de 1,5°C/min. La température est maintenue à 120°C pendant 4h. La température du précatalyseur intermédiaire est ensuite amenée à 400°C avec une rampe de 1°C/min sous une GHSV de 3 NI/h/g de précatalyseur intermédiaire. La température est maintenue à 400°C pendant 4h. Le précatalyseur intermédiaire D1 contient environ 8% poids de cobalt par rapport au poids du précatalyseur intermédiaire.

Le précatalyseur intermédiaire D1 est soumis à une étape finale d'imprégnation à sec, à une température de 20°C, au moyen d'une solution aqueuse de nitrate de cobalt. Le précatalyseur intermédiaire est séché dans un réacteur en lit fluidisé sous air à une GHSV de 3 NI/h/g de précatalyseur intermédiaire. La température est amenée de 20 à 120°C avec une rampe de 1,5°C/min. La température est maintenue à 120°C pendant 4h. La température du précatalyseur intermédiaire est ensuite amenée à 400°C avec une rampe de 1°C/min sous une GHSV de 3 NI/h/g de précatalyseur intermédiaire. La température est maintenue à 400°C pendant 4h. Cette étape finale de calcination permet l'obtention du précatalyseur D2 final contenant 15% poids de cobalt par rapport au poids du précatalyseur D2 final.

Pour obtenir un catalyseur D actif dans la réaction de Fischer-Tropsch, le précatalyseur D2 est soumis à une activation par réduction sous hydrogène pur à 400°C pendant 16h, sous une GHSV de 2NI/h/g de précatalyseur D2.

Les tailles de cristallites obtenues pour tous les précatalyseurs par diffraction des rayons X sont données ci-dessous.

**Tableau 1 :**

| | Catalyseur | Taille moyenne de cristallites de Co3O4 (nm) |
|---|---|---|
| | Précatalyseur intermédiaire A1 | 20,3 |
| Selon l'invention | Précatalyseur A2 | 18,4 |
| | Précatalyseur intermédiaire B1 | 19,3 |
| Comparatif | Précatalyseur B2 | 20,7 |
| | Précatalyseur intermédiaire C1 | 12,4 |
| Comparatif | Précatalyseur C2 | 16,3 |
| | Précatalyseur intermédiaire D1 | 12,1 |
| Comparatif | Précatalyseur D2 | 13,3 |

### Mise en œuvre du catalyseur dans la synthèse Fischer-Tropsch

Le catalyseur est mis en œuvre dans la réaction de synthèse Fischer-Tropsch de la façon suivante. Le catalyseur réduit protégé de la réoxydation par un solvant de nature paraffinique est introduit dans un réacteur continu, c'est-à-dire dans lequel les réactifs entrent en continu et les produits et les réactifs non convertis sortent en continu du réacteur agité, ledit réacteur est rempli de cire commerciale (Duracyne) à une température de 110°C, le test est ensuite démarré par injection du syngaz, dans les conditions suivantes :
Température = 220°C
Pression totale = 2MPa
Rapport molaire H2/CO = 2

Les conditions de test sont ajustées en modifiant le débit de gaz de synthèse de façon à atteindre une conversion de CO constante quelle que soit l'activité du catalyseur et quel que soit son niveau de désactivation au cours du test.

L'activité des catalyseurs A, B, C et D sont calculées par rapport à un catalyseur de référence dont l'activité est de 100%.

L'analyse en ligne des effluents gazeux permet de déterminer la conversion de CO, ainsi que les sélectivités en produits légers (C1-C5), notamment la sélectivité en méthane et la sélectivité en C5+ (produits contenant plus de 5 atomes de carbone).

**Tableau 2**

| Catalyseur | Activité relative (%) | Sélectivité C5+ (%) | Taille moyenne de cristallites mesurée par DRX (nm) des précatalyseurs finaux (± 10%) |
|---|---|---|---|
| Catalyseur A (invention) | 400 | 84,2 | 18,4 (A2) |
| Catalyseur B (comparatif) | 300 | 81,8 | 20,7 (B2) |
| Catalyseur C (comparatif) | 320 | 81,7 | 16,3 (C2) |
| Catalyseur D (comparatif) | 440 | 80,9 | 13,3 (D2) |

L'avantage du procédé de préparation du précatalyseur selon l'invention réside dans le choix de conditions spécifiques pour les premières étapes et les étapes finales de séchage et de calcination qui permet l'obtention de particules d'oxyde de cobalt (Co₃O₄) améliorant la sélectivité en molécules paraffiniques à longues chaînes, tout en conservant une bonne activité.

La mise en œuvre, à l'exemple 2, de conditions identiques pour les premières étapes et les étapes finales de séchage et de calcination ne permet pas d'obtenir un catalyseur aussi actif et sélectif que lorsque l'on réalise l'enchainement des étapes du procédé selon l'invention dans des conditions bien spécifiques mis en œuvre à l'exemple 1. De plus, bien que les précatalyseurs A2 et B2 présentent des tailles moyennes de cristallites de Co₃O₄ équivalentes, le catalyseur A présente une activité et une sélectivité en C5+ améliorées par rapport au catalyseur B.

Il ressort clairement des résultats obtenus avec les catalyseurs C et D (tableau 2) que la mise en œuvre des mêmes conditions opératoires pour les étapes de séchage et de calcination mais avec un enchainement différent de celui de la présente invention conduit à des catalyseurs moins sélectifs en C5+ par rapport au catalyseur A.

Ainsi, il apparait clairement que la mise en œuvre du procédé de préparation selon l'invention dans les conditions et selon l'enchainement de conditions spécifiques de l'invention est primordiale et permet d'améliorer la sélectivité et l'activité catalytique dans la réaction de Fischer-Tropsch.

## Revendications

1. Procédé de préparation d'un précatalyseur contenant un support poreux et du cobalt sous forme oxyde, la teneur en cobalt étant comprise entre 5 et 40% poids par rapport au poids du précatalyseur, ledit procédé comprenant au moins les étapes suivantes :
- une première étape a) d'imprégnation du support poreux, par la mise en contact d'au moins une solution comprenant au moins un précurseur inorganique de cobalt à une température comprise entre 5 et 40°C, ladite imprégnation permettant le dépôt de 2 à 15% poids de cobalt par rapport au poids du précatalyseur final,
- une première étape b) de séchage du précatalyseur intermédiaire obtenu à l'issue de l'étape a) d'imprégnation, ledit séchage est mis en œuvre en présence d'un gaz comprenant de l'air et/ou un gaz inerte, avec un débit de gaz par heure et par gramme de précatalyseur intermédiaire issu de l'étape a) (GHSV) compris entre 0,1 et 1,5 NI/h/g, et à une température comprise entre 60 et 110°C,
- une première étape c) de calcination du précatalyseur intermédiaire obtenu à l'issue de l'étape b), ladite calcination est mise en œuvre en présence d'un gaz comprenant de l'air et/ou un gaz inerte, avec un débit de gaz par heure et par gramme de précatalyseur intermédiaire issu de l'étape b) (GHSV) compris entre 0,1 et 1,5 NI/h/g, et à une température comprise entre 200 et 550°C,
- une étape d) d'imprégnation finale du précatalyseur intermédiaire obtenu à l'issue d'une étape précédente de calcination, par la mise en contact dudit précatalyseur intermédiaire avec au moins une solution comprenant au moins un précurseur inorganique de cobalt à une température comprise entre 5 et 40°C, ladite imprégnation permettant d'atteindre la teneur visée en cobalt du précatalyseur,
- une étape e) de séchage finale du précatalyseur intermédiaire obtenu à l'issue de l'étape d) d'imprégnation, ledit séchage est mis en œuvre en présence d'un gaz comprenant de l'air et/ou un gaz inerte, avec un débit de gaz par heure et par gramme de précatalyseur intermédiaire issu de l'étape d) (GHSV) compris entre 1,8 et 6,0 NI/h/g, et à une température comprise entre 110 et 160°C,
- une étape f) de calcination finale du précatalyseur intermédiaire obtenu à l'issue de l'étape e), ladite calcination est mise en œuvre en présence d'un gaz comprenant de l'air et/ou un gaz inerte, avec un débit de gaz par heure et par gramme de précatalyseur intermédiaire issu de l'étape e) (GHSV) compris entre 1,5 et 6,0 NI/h/g, à une température comprise entre 200 et 550°C.

2. Procédé selon la revendication 1 dans lequel les étapes a) et/ou d) d'imprégnation sont réalisées à sec, à une température comprise entre 15 et 25°C et de préférence entre 17 et 23°C.

3. Procédé selon les revendications 1 ou 2 dans lequel l'étape a) d'imprégnation permet le dépôt de 5 à 8% poids de cobalt par rapport au poids du précatalyseur final.

4. Procédé selon l'une quelconque des revendications précédentes dans lequel l'étape b) de séchage et/ou l'étape c) de calcination sont mises en œuvre à un débit de gaz par heure et par gramme de précatalyseur intermédiaire (GHSV) compris entre 0,15 et 1,2 NI/h/g et de préférence entre 0,2 et 0,9 NI/h/g.

5. Procédé selon l'une quelconque des revendications précédentes dans lequel l'étape b) de séchage est mise en œuvre à une température comprise entre 60 et 100°C et de préférence entre 70 et 90°C.

6. Procédé selon l'une quelconque des revendications précédentes dans lequel l'étape b) de séchage est mis en œuvre avec au moins une rampe de montée en température comprise entre 0,05 à 5°C/min, et de préférence comprise entre 0,1 et 2°C/min, et avec au moins une durée palier à la température de séchage comprise entre 1 et 12h, et de préférence comprises entre 2 et 6h.

7. Procédé selon l'une ou quelconques des revendications précédentes dans lequel l'étape c) est mise en œuvre avec au moins une rampe de montée en température comprise entre 3 et 20°C/min, et de préférence comprises entre 5 et 15°C/min, et avec au moins une durée de palier à la température de calcination comprise entre 1 et 12h, et de préférence comprises entre 2 et 4h.

8. Procédé selon l'une quelconque des revendications précédentes dans lequel l'étape d) d'imprégnation permet le dépôt de 5 à 8% poids de cobalt par rapport au poids du précatalyseur final.

9. Procédé selon l'une quelconque des revendications précédentes dans lequel la teneur en cobalt est comprise entre 10 et 30% poids par rapport au poids du précatalyseur final.

10. Procédé selon l'une quelconques de revendications précédentes dans lequel l'étape e) de séchage est mise en œuvre avec au moins une rampe de montée en température comprise entre 0,05 et 5,0°C, et de préférence comprise entre 0,1 et 2,0°C/min, et avec au moins une durée de palier à la température de séchage comprise entre 2 et 16h, et de préférence comprise entre 3 et 8h.

11. Procédé selon l'une quelconque des revendications précédentes dans lequel l'étape f) de calcination est mise en œuvre avec au moins une rampe de montée en température comprise entre 0,05 et 1,5°C/min, de préférence comprises entre 0,1 et 1,2°C/min, et avec une durée de palier à la température de calcination comprise entre 2 et 16h, et de préférence comprise entre 3 et 6h.

12. Procédé selon l'une quelconque des revendications précédentes dans lequel le procédé comprend les étapes suivantes :
- une première étape a) d'imprégnation du support poreux, , par la mise en contact d'au moins une solution comprenant au moins un précurseur inorganique de cobalt à une température comprise entre 5 et 40°C, ladite imprégnation permettant le dépôt de 2 à 15% poids de cobalt par rapport au poids du précatalyseur final,
- une première étape b) de séchage du précatalyseur intermédiaire obtenu à l'issue de l'étape a) d'imprégnation, ledit séchage est mis en œuvre en présence d'un gaz comprenant de l'air et/ou un gaz inerte, avec un débit de gaz par heure et par gramme de précatalyseur intermédiaire issu de l'étape a) (GHSV) compris entre 0,1 et 1,5 NI/h/g, et à une température comprise entre 60 et 110°C,
- une première étape c) de calcination du précatalyseur intermédiaire obtenu à l'issue de l'étape b), ladite calcination est mise en œuvre en présence d'un gaz comprenant de l'air et/ou un gaz inerte, avec un débit de gaz par heure et par gramme de précatalyseur intermédiaire issu de l'étape b) (GHSV) compris entre 0,1 et 1,5 NI/h/g, et à une température comprise entre 200 et 550°C,
- une étape d) d'imprégnation finale du précatalyseur intermédiaire obtenu à l'étape c) de calcination, par la mise en contact dudit précatalyseur intermédiaire avec au moins une solution comprenant au moins un précurseur inorganique de cobalt à une température comprise entre 5 et 40°C, ladite imprégnation permettant d'atteindre la teneur visée en cobalt du précatalyseur,
- une étape e) de séchage finale du précatalyseur intermédiaire obtenu à l'issue de l'étape d) d'imprégnation, ledit séchage est mis en œuvre en présence d'un gaz comprenant de l'air et/ou un gaz inerte, avec un débit de gaz par heure et par gramme de précatalyseur intermédiaire issu de l'étape d) (GHSV) comprise entre 1,8 et 6,0 NI/h/g, et à une température comprise entre 110 et 160°C,
- une étape f) de calcination finale du précatalyseur intermédiaire obtenu à l'issue de l'étape e), ladite calcination est mise en œuvre en présence d'un gaz comprenant de l'air et/ou un gaz inerte, avec un débit de gaz par heure et par gramme de précatalyseur intermédiaire issu de l'étape e) (GHSV) compris entre 1,5 et 6,0 NI/h/g, à une température comprise entre 200 et 550°C.

## Patentansprüche

1. Verfahren zur Herstellung eines Präkatalysators, der einen porösen Träger und Kobalt in Oxidform enthält, wobei der Kobaltgehalt im Bereich zwischen 5 und 40 Gew.-%, bezogen auf das Gewicht des Präkatalysators, liegt, wobei das Verfahren mindestens die folgenden Schritte umfasst:
- einen ersten Schritt a) zum Imprägnieren des porösen Trägers durch Inkontaktbringen mit mindestens einer Lösung, die mindestens eine anorganische Kobaltvorstufe enthält, bei einer Temperatur zwischen 5 und 40 °C, wobei das Imprägnieren das Abscheiden von 2 bis 15 Gew.-% Kobalt, bezogen auf das Gewicht des fertigen Präkatalysators, ermöglicht,
- einen ersten Schritt b) zum Trocknen des am Ende des Imprägnierschritts a) erhaltenen Intermediär-Präkatalysators, wobei das Trocknen in Gegenwart eines Gases, umfassend Luft und/oder ein Inertgas, mit einem Gasdurchsatz pro Stunde und pro Gramm Intermediär-Katalysator aus Schritt a) (GHSV) im Bereich zwischen 0,1 und 1,5 NI/h/g und bei einer Temperatur zwischen 60 und 110 °C durchgeführt wird,
- einen ersten Schritt c) zum Trocknen des am Ende von Schritt b) erhaltenen Intermediär-Präkatalysators, wobei das Kalzinieren in Gegenwart eines Gases, umfassend Luft und/oder ein Inertgas, mit einem Gasdurchsatz pro Stunde und pro Gramm Intermediär-Katalysator aus Schritt b) (GHSV) im Bereich zwischen 0,1 und 1,5 NI/h/g und bei einer Temperatur zwischen 200 und 550 °C durchgeführt wird,
- einen Schritt d) zum abschließenden Imprägnieren des am Ende eines vorherigen Schrittes zum Kalzinieren erhaltenen Intermediär-Präkatalysators durch Inkontaktbringen des Intermediär-Präkatalysators mit mindestens einer Lösung, umfassend mindestens eine anorganische Kobaltvorstufe bei einer Temperatur im Bereich zwischen 5 und 40 °C, wobei es das Imprägnieren ermöglicht, den angestrebten Kobaltgehalt des Präkatalysators zu erreichen,
- einen Schritt e) zum abschließenden Trocknen des am Ende des Imprägnierschritts d) erhaltenen Intermediär-Präkatalysators, wobei das Trocknen in Gegenwart eines Gases, umfassend Luft und/oder ein Inertgas, mit einem Gasdurchsatz pro Stunde und pro Gramm Intermediär-Katalysator aus Schritt d) (GHSV) im Bereich zwischen 1,8 und 6,0 NI/h/g und bei einer Temperatur zwischen 110 und 160°C durchgeführt wird,
- einen Schritt f) zum abschließenden Kalzinieren des am Ende von Schritt e) erhaltenen Intermediär-Präkatalysators, wobei das Kalzinieren in Gegenwart eines Gases, umfassend Luft und/oder ein Inertgas, mit einem Gasdurchsatz pro Stunde und pro Gramm Intermediär-Katalysator aus Schritt e) (GHSV) im Bereich zwischen 1,5 und 6,0 NI/h/g bei einer Temperatur im Bereich zwischen 200 und 550 °C durchgeführt wird.

2. Verfahren nach Anspruch 1, wobei die Schritte a) und/oder d) zum Imprägnieren in trockenem Zustand bei einer Temperatur im Bereich zwischen 15 und 25 °C und vorzugsweise zwischen 17 und 23 °C durchgeführt werden.

3. Verfahren nach den Ansprüchen 1 oder 2, wobei der Schritt a) zum Imprägnieren das Abscheiden von 5 bis 8 Gew.-% Kobalt, bezogen auf das Gewicht des Präkatalysator-Endprodukts, ermöglicht.

4. Verfahren nach einem der vorhergehenden Ansprüche, wobei Schritt b) zum Trocknen und/oder Schritt c) zum Kalzinzieren bei einem Gasdurchsatz pro Stunde und pro Gramm Intermediär-Präkatalysator (GHSV) im Bereich zwischen 0,15 und 1,2 NI/h/g und vorzugsweise zwischen 0,2 und 0,9 NI/h/g durchgeführt werden.

5. Verfahren nach einem der vorhergehenden Ansprüche, wobei Schritt b) zum Trocknen bei einer Temperatur im Bereich zwischen 60 und 100 °C und vorzugsweise zwischen 70 und 90 °C durchgeführt wird.

6. Verfahren nach einem der vorhergehenden Ansprüche, wobei Schritt b) zum Trocknen mit mindestens einer Temperaturanstiegsrampe im Bereich zwischen 0,05 bis 5 °C/min und vorzugsweise im Bereich zwischen 0,1 und 2 °C/min und mit mindestens einer Dauer der Stufe bei der Trocknungstemperatur im Bereich zwischen 1 und 12 h, und vorzugsweise im Bereich zwischen 2 und 6 h durchgeführt wird.

7. Verfahren nach einem oder einigen der vorhergehenden Ansprüche, wobei Schritt c) mit mindestens einer Temperaturanstiegsrampe im Bereich zwischen 3 und 20 °C/min und vorzugsweise im Bereich zwischen 5 und 15 °C/min und mit mindestens einer Dauer der Stufe bei der Kalzinierungstemperatur im Bereich zwischen 1 und 12 h, und vorzugsweise im Bereich zwischen 2 und 4 h durchgeführt wird.

8. Verfahren nach einem der vorhergehenden Ansprüche, wobei der Schritt d) zum Imprägnieren das Abscheiden von 5 bis 8 Gew.-% Kobalt, bezogen auf das Gewicht des Präkatalysator-Endprodukts, ermöglicht.

9. Verfahren nach einem der vorhergehenden Ansprüche, wobei der Kobaltgehalt im Bereich zwischen 10 und 30 Gew.-%, bezogen auf das Gewicht des Präkatalysators, liegt.

10. Verfahren nach einem der vorhergehenden Ansprüche, wobei Schritt e) zum Trocknen mit mindestens einer Temperaturanstiegsrampe im Bereich zwischen 0,05 und 5,0°C und vorzugsweise im Bereich zwischen 0,1 und 2,0°C/min und mit mindestens einer Dauer der Stufe bei der Trocknungstemperatur im Bereich zwischen 2 und 16 h, und vorzugsweise im Bereich zwischen 3 und 8 h durchgeführt wird.

11. Verfahren nach einem der vorhergehenden Ansprüche, wobei Schritt f) zum Kalzinieren mit mindestens einer Temperaturanstiegsrampe im Bereich zwischen 0,05 und 1,5°C/min und vorzugsweise im Bereich zwischen 0,1 und 1,2°C/min und mit einer Dauer der Stufe bei der Trocknungstemperatur im Bereich zwischen 2 und 16 h, und vorzugsweise im Bereich zwischen 3 und 6 h durchgeführt wird.

12. Verfahren nach einem der vorhergehenden Ansprüche, wobei das Verfahren die folgenden Schritte umfasst:
- einen ersten Schritt a) zum Imprägnieren des porösen Trägers durch Inkontaktbringen mit mindestens einer Lösung, die mindestens eine anorganische Kobaltvorstufe enthält, bei einer Temperatur zwischen 5 und 40 °C, wobei das Imprägnieren das Abscheiden von 2 bis 15 Gew.-% Kobalt, bezogen auf das Gewicht des Präkatalysator-Endprodukts, ermöglicht,
- einen ersten Schritt b) zum Trocknen des am Ende des Imprägnierschritts a) erhaltenen Intermediär-Präkatalysators, wobei das Trocknen in Gegenwart eines Gases, umfassend Luft und/oder ein Inertgas, mit einem Gasdurchsatz pro Stunde und pro Gramm Intermediär-Katalysator aus Schritt a) (GHSV) im Bereich zwischen 0,1 und 1,5 NI/h/g und bei einer Temperatur im Bereich zwischen 60 und 110 °C durchgeführt wird,
- einen ersten Schritt c) zum Trocknen des am Ende von Schritt b) erhaltenen Intermediär-Präkatalysators, wobei das Kalzinieren in Gegenwart eines Gases, umfassend Luft und/oder ein Inertgas, mit einem Gasdurchsatz pro Stunde und pro Gramm Intermediär-Katalysator aus Schritt b) (GHSV) im Bereich zwischen 0,1 und 1,5 NI/h/g und bei einer Temperatur im Bereich zwischen 200 und 550 °C durchgeführt wird,
- einen Schritt d) zum abschließenden Imprägnieren in Schritt c) zum Kalzinieren erhaltenen Intermediär-Präkatalysators durch Inkontaktbringen des Intermediär-Präkatalysators mit mindestens einer Lösung, umfassend mindestens eine anorganische Kobaltvorstufe bei einer Temperatur im Bereich zwischen 5 und 40 °C, wobei es das Imprägnieren ermöglicht, den angestrebten Kobaltgehalt des Präkatalysators zu erreichen,
- einen Schritt e) zum abschließenden Trocknen des am Ende des Imprägnierschritts d) erhaltenen Intermediär-Präkatalysators, wobei das Trocknen in Gegenwart eines Gases, umfassend Luft und/oder ein Inertgas, mit einem Gasdurchsatz pro Stunde und pro Gramm Intermediär-Katalysator aus Schritt d) (GHSV) im Bereich zwischen 1,8 und 6,0 NI/h/g und bei einer Temperatur im Bereich zwischen 110 und 160 °C durchgeführt wird,
- einen Schritt f) zum abschließenden Kalzinieren des am Ende von Schritt e) erhaltenen Intermediär-Präkatalysators, wobei das Kalzinieren in Gegenwart eines Gases, umfassend Luft und/oder ein Inertgas, mit einem Gasdurchsatz pro Stunde und pro Gramm Intermediär-Katalysator aus Schritt e) (GHSV) im Bereich zwischen 1,5 und 6,0 NI/h/g bei einer Temperatur im Bereich zwischen 200 und 550 °C durchgeführt wird.

## Claims

1. Method for preparation of a precatalyst that contains a porous substrate and cobalt in oxide form, with the cobalt content being between 5 and 40% by weight in relation to the weight of the precatalyst, with said method comprising at least the following stages:
- A first stage a) for impregnation of the porous substrate, by bringing into contact at least one solution that comprises at least one inorganic cobalt precursor at a temperature of between 5 and 40°C, with said impregnation making possible the deposition of 2 to 15% by weight of cobalt in relation to the weight of the final precatalyst,
- A first stage b) for drying the intermediate precatalyst that is obtained at the end of the impregnation stage a), said drying is implemented in the presence of a gas that comprises air and/or an inert gas, with a flow rate of gas per hour and per gram of intermediate precatalyst that is obtained from stage a) (GHSV) of between 0.1 and 1.5 Nl/h/g, and at a temperature of between 60 and 110°C,
- A first stage c) for calcination of the intermediate precatalyst that is obtained at the end of stage b), said calcination is implemented in the presence of a gas that comprises air and/or an inert gas, with a flow rate of gas per hour and per gram of intermediate precatalyst that is obtained from stage b) (GHSV) of between 0.1 and 1.5 Nl/h/g, and at a temperature of between 200 and 550°C,
- A final impregnation stage d) of the intermediate precatalyst that is obtained at the end of a preceding calcination stage, by bringing said intermediate precatalyst into contact with at least one solution that comprises at least one inorganic cobalt precursor at a temperature of between 5 and 40°C, with said impregnation making it possible to reach the targeted cobalt content of the precatalyst,
- A final drying stage e) of the intermediate precatalyst that is obtained at the end of the impregnation stage d), said drying is implemented in the presence of a gas that comprises air and/or an inert gas, with a flow rate of gas per hour and per gram of intermediate precatalyst that is obtained from stage d) (GHSV) of between 1.8 and 6.0 Nl/h/g, and at a temperature of between 110 and 160°C,
- A final calcination stage f) of the intermediate precatalyst that is obtained at the end of stage e), said calcination is implemented in the presence of a gas that comprises air and/or an inert gas, with a flow rate of gas per hour and per gram of intermediate precatalyst that is obtained from stage e) (GHSV) of between 1.5 and 6.0 Nl/h/g, at a temperature of between 200 and 550°C.

2. Method according to Claim 1, in which the impregnation stages a) and/or d) are carried out in the dry state, at a temperature of between 15 and 25°C, and preferably between 17 and 23°C.

3. Method according to Claim 1 or 2, in which the impregnation stage a) makes possible the deposition of 5 to 8% by weight of cobalt in relation to the weight of the final precatalyst.

4. Method according to any one of the preceding claims, in which the drying stage b) and/or the calcination stage c) are implemented at a flow rate of gas per hour and per gram of intermediate precatalyst (GHSV) of between 0.15 and 1.2 Nl/h/g and preferably between 0.2 and 0.9 Nl/h/g.

5. Method according to any one of the preceding claims, in which the drying stage b) is implemented at a temperature of between 60 and 100°C, and preferably between 70 and 90°C.

6. Method according to any one of the preceding claims, in which the drying stage b) is implemented with at least one temperature rise slope of between 0.05 to 5°C/minute, and preferably between 0.1 and 2°C/minute, and with at least one plateau period at the drying temperature of between 1 and 12 hours, and preferably between 2 and 6 hours.

7. Method according to one or any of the preceding claims in which stage c) is implemented with at least one temperature rise slope of between 3 and 20°C/minute, and preferably between 5 and 15°C/minute, and with at least one plateau period at the calcination temperature of between 1 and 12 hours, and preferably between 2 and 4 hours.

8. Method according to any one of the preceding claims, in which the impregnation stage d) makes possible the deposition of 5 to 8% by weight of cobalt in relation to the final precatalyst weight.

9. Method according to any one of the preceding claims, in which the cobalt content is between 10 and 30% by weight in relation to the weight of the final precatalyst.

10. Method according to any one of the preceding claims, in which the drying stage e) is implemented with at least one temperature rise slope of between 0.05 and 5.0°C, and preferably between 0.1 and 2.0°C/minute, and with at least one plateau period at the drying temperature of between 2 and 16 hours, and preferably between 3 and 8 hours.

11. Method according to any one of the preceding claims, in which the calcination stage f) is implemented with at least one temperature rise slope of between 0.05 and 1.5°C/minute, preferably between 0.1 and 1.2°C/minute, and with a plateau period at the calcination temperature of between 2 and 16 hours, and preferably between 3 and 6 hours.

12. Method according to any one of the preceding claims, in which the method comprises the following stages:
- A first stage a) for impregnation of the porous substrate, by bringing into contact at least one solution that comprises at least one inorganic cobalt precursor at a temperature of between 5 and 40°C, with said impregnation making possible the deposition of 2 to 15% by weight of cobalt in relation to the weight of the final precatalyst,
- A first stage b) for drying the intermediate precatalyst that is obtained at the end of the impregnation stage a), said drying is implemented in the presence of a gas that comprises air and/or an inert gas, with a flow rate of gas per hour and per gram of intermediate precatalyst that is obtained from stage a) (GHSV) of between 0.1 and 1.5 Nl/h/g, and at a temperature of between 60 and 110°C,
- A first stage c) for calcination of the intermediate precatalyst that is obtained at the end of stage b), said calcination is implemented in the presence of a gas that comprises air and/or an inert gas, with a flow rate of gas per hour and per gram of intermediate precatalyst that is obtained from stage b) (GHSV) of between 0.1 and 1.5 Nl/h/g, and at a temperature of between 200 and 550°C,
- A stage d) for final impregnation of the intermediate precatalyst that is obtained in the calcination stage c), by bringing into contact said intermediate precatalyst with at least one solution that comprises at least one inorganic cobalt precursor at a temperature of between 5 and 40°C, with said impregnation making it possible to reach the targeted cobalt content of the precatalyst,
- A stage e) for final drying of the intermediate precatalyst that is obtained at the end of the impregnation stage d), said drying is implemented in the presence of a gas that comprises air and/or an inert gas, with a flow rate of gas per hour and per gram of intermediate precatalyst that is obtained from stage d) (GHSV) of between 1.8 and 6.0 Nl/h/g, and at a temperature of between 110 and 160°C,
- A stage f) for final calcination of the intermediate precatalyst that is obtained at the end of stage e), said calcination is implemented in the presence of a gas that comprises air and/or an inert gas, with a flow rate of gas per hour and per gram of intermediate precatalyst that is obtained from stage e) (GHSV) of between 1.5 and 6.0 Nl/h/g, at a temperature of between 200 and 550°C.
